# FASCICULE DE BREVET EUROPEEN

(11) **EP 1 999 412 B1**
(45) Date de publication et mention de la délivrance du brevet: **14.08.2013**
(21) Numéro de dépôt: 07731201.5
(22) Date de dépôt: 26.03.2007
(51) Int. Cl.: F24F 7/08, F24F 13/02

(54) **PROCEDE ET SYSTEME DE CHAUFFAGE / RAFRAICHISSEMENT ET VENTILATION D'UN LOCAL**
HEIZ-KÜHL-UND LÜFTUNGSVERFAHREN UND SYSTEM EINES RAUMES
METHOD, DEVICE AND SYSTEM FOR HEATING/COOLING AND VENTILATING A PREMISES

(30) Priorité: 28.03.2006 FR 0602679
(43) Date de publication de la demande: 10.12.2008
(73) Titulaire: ALDES AERAULIQUE, 69200 Venissieux Cedex (FR)
(72) Inventeur: BUSEYNE, Serge, 31200 Toulouse (FR); LABAUME, Damien, 31320 Castanet Tolosan (FR)
(74) Mandataire: Maureau, Philippe
(86) Numéro de dépôt international: PCT/FR2007/000518
(87) Numéro de publication internationale: WO 2007/110505

(56) Documents cités:
- FR-A1- 2 839 143
- GB-A- 2 261 964
- JP-A- 3 164 647
- US-A- 5 005 636
- US-A1- 2003 000 230

## Description

La présente invention concerne un procédé et un système de chauffage / rafraîchissement et ventilation d'un local.

L'invention s'applique à tout local, qu'il soit d'habitation (individuelle ou collective) ou tertiaire. Un tel local comprend typiquement plusieurs pièces de séjour (par exemple salle à manger, salon et chambres dans le cas d'un logement) et plusieurs pièces techniques (cuisine, salle de bain, toilettes).

Compte tenu de l'évolution actuelle des bâtiments, les besoins de chauffage tendent à diminuer fortement. En effet, les progrès sur les différents matériaux (isolation, vitrage, pont thermique...) ont permis de réduire de manière importante les déperditions thermiques des bâtiments. Désormais, le chauffage aéraulique - qui consiste à utiliser le vecteur air pour couvrir l'ensemble des déperditions - devient une alternative intéressante pour assurer l'ensemble du chauffage d'un logement. Par ailleurs, un des avantages du vecteur air est de pouvoir être utilisé en rafraîchissement en période estivale.

L'air distribué dans le local comprend de l'air neuf, provenant de l'extérieur et destiné à la ventilation, et de l'air recyclé, provenant de l'intérieur du local. La distribution de l'air se fait à travers un ensemble centralisé ventilateur - batterie qui est appelé couramment « gainable ». L'air recyclé est généralement repris dans les circulations du local pour ensuite être chauffé ou refroidi avant d'être insufflé dans les pièces de séjour. La production de chaleur au niveau de la batterie peut être soit du type électrique (résistance chauffante), soit du type eau chaude (à partir d'une chaudière ou autre), soit du type thermodynamique (détente directe).

La présence d'un ventilateur de recyclage de l'air est quasi obligatoire pour assurer un chauffage ou un rafraîchissement satisfaisant du local. En effet, le traitement thermique (chauffage ou rafraîchissement) de l'air neuf uniquement ne permet généralement pas, en restant à des niveaux de températures de soufflage convenables, de couvrir l'ensemble des besoins.

Dans les locaux chauffés et/ou rafraîchis par des systèmes de chauffage aéraulique, il faut prêter une attention particulière à la gestion de l'air neuf de ventilation. En effet, l'apport d'air neuf nécessaire pour garantir une bonne qualité de l'air est souvent un problème à gérer, car les besoins en air neuf et les besoins en chauffage ou rafraîchissement sont généralement contradictoires.

On présente ci-après plusieurs systèmes courants permettant de concilier le besoin en air neuf et le besoin en chauffage ou rafraîchissement.

Le système le plus classique consiste à traiter la ventilation et le chauffage par deux systèmes indépendants. La ventilation, traitée avec un système classique et découplée du fonctionnement du système de chauffage, est assurée par un système de type VMC (ventilation mécanique contrôlée) simple flux (entrées d'air et groupe d'extraction). Toutefois, pour les unités intérieures de traitement thermique de l'air, l'association avec une ventilation simple flux peut générer des perturbations aérauliques avec les entrées d'air. En effet, lors de la mise en route du « gainable », une quantité d'air recyclé importante est introduite dans une pièce. Du fait de la perte de charge du transit d'air vers la circulation, la pression dans la pièce s'élève et les entrées d'air peuvent devenir des sorties d'air ce qui augmente les déperditions thermiques pour l'air et diminue la qualité de l'air. Cette solution est donc inadéquate au plan technique.

Pour éviter ce problème, on peut utiliser un système de ventilation de type VMC double-flux. Avec un tel système, il n'y a pas d'entrée d'air directe depuis l'extérieur. En effet, l'insufflation est réalisée par des conduits indépendants et des bouches de soufflage dans les pièces de séjour, l'extraction se faisant dans les pièces techniques. Mais, dans la mesure où les unités gainables utilisent également un réseau d'insufflation pour véhiculer l'air de chauffage ou de rafraîchissement, la cohabitation avec un système de ventilation double flux pose de gros problèmes d'installation.

Un autre système visant à résoudre le problème d'installation précité consiste à essayer de traiter la ventilation hygiénique (amenée d'air neuf venant de l'extérieur) dans le même réseau. On évite ainsi le problème d'encombrement lié à un double réseau de soufflage et à la présence de deux terminaux de soufflage par pièce. Certaines installations de conditionnement d'air avec des unités de type gainables sont réalisées avec une amenée d'air neuf en amont de la machine. Si le contrôle de la température de chaque pièce se fait par variation du débit d'air soufflé (registre motorisé par exemple), il est alors impossible de garantir les débits d'air neuf de ventilation par pièce : la ventilation n'est donc pas réglementaire. Puisque les besoins de ventilation et de chauffage ne sont pas concomitants, on se retrouve dans certains cas soit avec une sous-ventilation soit avec des surchauffes. Par ailleurs, une difficulté complémentaire est la gestion de la température pièce par pièce. L'air est chauffé par une seule batterie pour tous les points de distribution ce qui complique encore la régulation de la température.

Pour les unités intérieures de type gainables, il existe un moyen de parvenir à traiter l'air neuf tout en utilisant le même réseau d'insufflation. Ce système est décrit dans le document WO 1999/057491. Le principe est de diffuser en vrac dans un plénum (faux-plafond) un mélange d'air recyclé et d'air neuf de ventilation, l'ensemble étant traité thermiquement par l'unité gainable On réalise ainsi une fourniture centralisée d'air à une même température, cet air étant ensuite insufflé dans les différentes pièces de séjour au moyen de bouches reliées au plénum. La température est régulée dans chacune de ces pièces par le degré d'ouverture variable de la bouche correspondante.

Or, la demande thermique de chaque pièce de séjour dépend de la température extérieure, alors que le besoin de ventilation en air neuf de chaque pièce est fixe. Selon l'ouverture de chacune des bouches, la quantité d'air neuf insufflée est donc fluctuante. En particulier, si le besoin en chauffage est faible, on insuffle une trop faible quantité d'air neuf, et le besoin en ventilation n'est pas satisfait. Pour pallier ce problème, le document WO 99/57491 prévoit de comptabiliser l'apport d'air neuf sur une période donnée puis d'ajuster l'écart par une sur-ventilation temporaire et localisée aux pièces en déficit. Cela représente un ensemble complexe de gestion électronique liée à l'interdépendance de la production d'énergie et de la ventilation dans ce cas. De plus, le système proposé par ce document nécessite une sur-ventilation énergivore pour parvenir aux débits réglementaires.

Par ailleurs, on connaît du document FR 2 839 143 un système dans lequel un élément d'amenée d'air neuf de ventilation et de distribution est prévu en aval de l'unité de chauffage de l'air recyclé et vient se connecter au soufflage de l'unité gainable. Cet élément permet d'une part de contrôler les besoins thermiques pièce par pièce, et d'autre part d'assurer de manière permanente et régulée le débit d'air neuf pièce par pièce. Le dispositif permet ainsi de maintenir l'indépendance entre la production d'énergie et la ventilation, mais au travers d'un même conduit ce qui est recherché pour des gains d'encombrement et des facilités de mise en place. De plus, le document JP-A-03164647 décrit une méthode et un système correspondant au préambule respectif des revendications 1 et 5.

Cependant, ce système nécessite la mise en route du ventilateur de recyclage dès qu'il y a des besoins de chauffage. Ceci est vrai pour les systèmes précédemment cités. Cela engendre une consommation électrique importante et peut créer des problèmes acoustiques.

L'invention vise à remédier aux inconvénients mentionnés ci-dessus, en permettant d'assurer de façon couplée:
- le chauffage et/ou le rafraîchissement d'un local au moyen du vecteur air, en permettant une régulation thermique pièce par pièce ;
- une gestion adéquate des débits de ventilation et donc de la qualité d'air intérieur pièce par pièce ;
et ce d'une manière simple et avec une consommation électrique peu importante.

A cet effet, et selon un premier aspect, l'invention concerne un procédé de chauffage / rafraîchissement et ventilation d'un local comprenant plusieurs pièces de séjour et plusieurs pièces techniques, dans lequel:
- on amène de l'air neuf de ventilation et de l'air recyclé dans une chambre intérieure définie par un caisson situé dans le local;
- on traite thermiquement l'air contenu dans ladite chambre intérieure en fonction de la température de consigne dans au moins une pièce de séjour ;
- on insuffle l'air contenu dans ladite chambre intérieure dans chacune des pièces de séjour à alimenter;
- on évacue l'air vicié à partir des pièces techniques ;
- pour chaque pièce de séjour à alimenter, on traite thermiquement l'air neuf de ventilation destiné à être insufflé dans une pièce de séjour donnée en fonction de la température de consigne de ladite pièce de séjour, et indépendamment du traitement thermique de l'air destiné à être insufflé dans une autre pièce de séjour;

Selon une définition générale de l'invention, ce procédé est caractérisé en ce que :
- seulement si cela est nécessaire pour atteindre la température de consigne dans au moins une pièce de séjour, on amène de l'air recyclé dans ladite- chambre intérieure, qui se mélange à l'air neuf de ventilation et subit le même traitement thermique.

De la sorte, on assure un apport suffisant d'air neuf de ventilation, conformément à la réglementation, et ce quels que soient les besoins en chauffage / rafraîchissement. Ainsi, on peut garantir une qualité satisfaisante de l'air dans chaque pièce, sans mettre en oeuvre des moyens complexes.

En outre, l'air de recyclage n'étant amené dans le caisson que si cela, s'avère nécessaire pour atteindre la température de consigne, on limite considérablement la consommation électrique permettant cette amenée d'air recyclé, et les bruits correspondants.

Le ventilateur de recyclage peut notamment être mis en fonctionnement dans le cas où l'une des pièces principales se trouve en surchauffe (température de consigne dépassée par exemple de 2°C). Ceci peut se produire lorsque se trouve dans une des pièces du local une cheminée à foyer fermé ou tout autre système de chauffage d'appoint ponctuel. Cette situation arrive également quand une façade est ensoleillée et que l'autre ne l'est pas. La mise en route du ventilateur de recyclage permet ainsi d'homogénéiser les températures dans les différentes pièces et d'éviter les surchauffes.

Le caisson peut être constitué par un boîtier disposé dans le local, ou par un plénum formé dans le local lui-même, comme par exemple un faux-plafond.

L'invention permet également de réguler simplement la température pièce par pièce, et ne met pas en oeuvre de système de fourniture centralisée d'air à une même température.

Le débit d'air neuf de ventilation amené dans une pièce de séjour peut être sensiblement constant et indépendant de la température de consigne dans ladite pièce. En variante, ce débit peut être asservi à au moins un paramètre mesuré dans le local et correspondant au besoin de ventilation de celui-ci (présence d'un ou plusieurs occupants, taux de CO₂, taux d'humidité, ou tout autre traceur de pollution dans la pièce considérée).

Par exemple, on amène de l'air recyclé dans la chambre intérieure lorsque, après avoir insufflé de l'air neuf de ventilation traité thermiquement dans au moins une pièce de séjour pendant une durée prédéterminée, la température dans ladite pièce de séjour est toujours sensiblement différente de la température de consigne.

Selon un deuxième aspect, l'invention concerne un- système de chauffage / rafraîchissement et ventilation d'un local comprenant plusieurs pièces de séjour et plusieurs pièces techniques, le système comprenant un dispositif de chauffage / rafraîchissement et ventilation comportant un caisson définissant une chambre intérieure, le caisson comportant:
- au moins un orifice d'entrée d'air neuf de ventilation et un orifice d'entrée d'air recyclé débouchant dans ladite chambre intérieure ;
- des orifices d'insufflation de l'air contenu dans la chambre intérieure, destinés à être reliés chacun à une pièce de séjour à alimenter ;
- une pluralité d'unités de traitement thermique de l'air associées chacune à un orifice d'insufflation de l'air et destinées à être commandées indépendamment les unes des autres en fonction de la température de consigne de la pièce de séjour correspondante ;
le dispositif de chauffage / rafraîchissement et ventilation comportant en outre un ventilateur agencé pour permettre l'entrée d'air recyclé dans la chambre intérieure par l'orifice d'entrée d'air recyclé.

La particularité du système selon l'invention est qu'il comprend une unité centrale de pilotage apte à commander la mise en route et la vitesse de rotation du ventilateur de recyclage, en fonction de l'écart entre la température réelle et la température de consigne dans au moins une pièce de séjour, si la température de consigne ne peut pas être atteinte par le traitement thermique de l'air neuf de ventilation seul.

Grâce à- ce système, il est possible d'obtenir la température souhaitée dans chacune des pièces de séjour, tout en garantissant un débit satisfaisant d'air neuf de ventilation.

Avantageusement, chaque orifice d'insufflation présente une section adaptée au débit d'air souhaité dans la pièce de séjour correspondante. On peut ainsi augmenter le débit d'air insufflé tout en conservant le même rapport entre les différentes pièces. Si, par exemple, les orifices d'insufflation sont de sections sensiblement identiques, on peut obtenir une répartition sensiblement identique de l'air neuf entre les différentes pièces de séjour.

Le système peut en outre comprendre un module de ventilation comportant une entrée d'air neuf de ventilation depuis l'extérieur du local, une sortie d'air neuf de ventilation connectée à l'orifice d'entrée d'air neuf de ventilation du dispositif, une entrée d'air vicié reliée à chacune des pièces techniques d'où l'air doit être extrait et une sortie d'air vicié vers l'extérieur du local.

Le module de ventilation peut être un module de VMC double-flux.

On décrit à présent, à titre d'exemple non limitatif, un mode de réalisation possible de l'invention, en référence aux figures annexées :
La figure 1 est une vue schématique en perspective et de dessus d'un local comportant un système de chauffage / rafraîchissement et ventilation selon l'invention ;
La figure 2 est une vue en perspective avant d'un dispositif de chauffage / rafraîchissement et ventilation selon l'invention;
La figure 3 est une vue en perspective arrière du dispositif de la figure 2 ; et
La figure 4 est une vue similaire à la figure 2 montrant l'intérieur du dispositif.

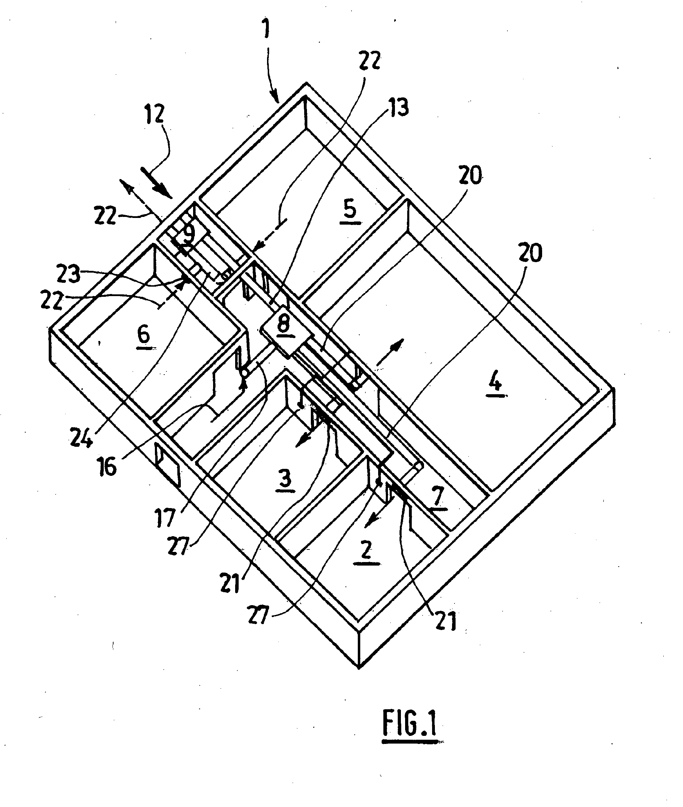

La figure 1 représente un local 1, ici une habitation individuelle, comprenant plusieurs pièces de séjour telles que deux chambres 2, 3 et une salle à manger - salon 4, des pièces techniques telles qu'une cuisine 5, une salle de bain - toilettes 6, et un couloir 7.

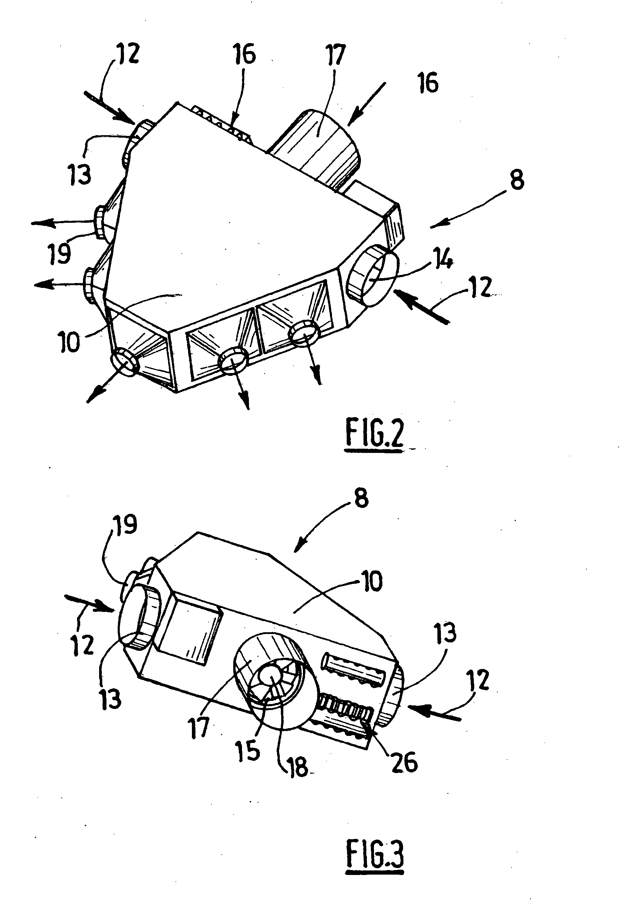

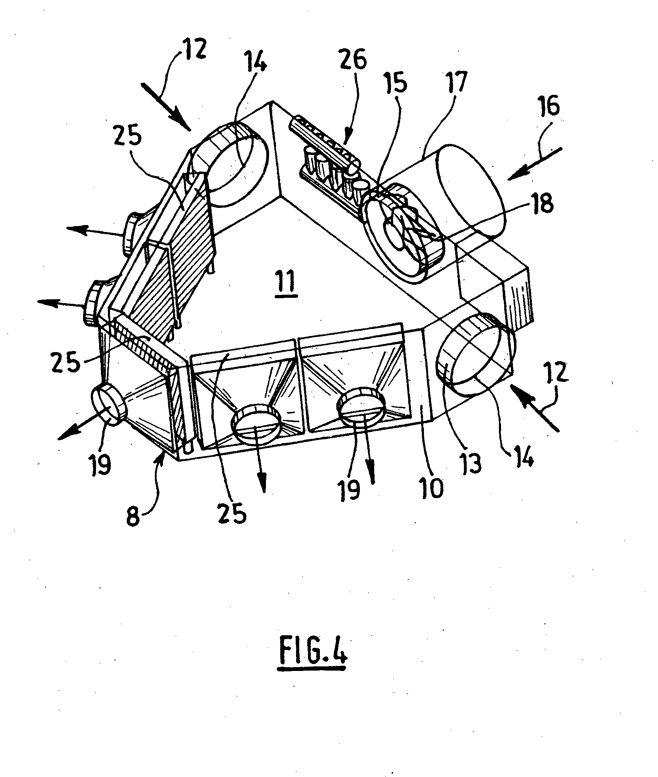

Dans le local 1 est placé un dispositif 8 de chauffage / rafraîchissement et ventilation selon l'invention et un module de ventilation 9 de type VMC double flux. Le dispositif 8, plus particulièrement illustré sur les figures 2 à 4, comprend un caisson 10 définissant une chambre intérieure 11.

Le module de ventilation 9 permet l'entrée d'air neuf de ventilation 12, éventuellement filtré, depuis l'extérieur du local 1 et son amenée par une première conduite 13 à un orifice d'entrée 14 d'air neuf de ventilation ménagé sur le caisson 10 et débouchant dans la chambre intérieure 11. Dans la réalisation des figures 2 à 4, le dispositif 8 comprend deux orifices d'entrée 14 d'air neuf de ventilation 12.

Le caisson 10 comporte également un orifice d'entrée 15 d'air recyclé 16 connecté à une deuxième conduite 17 débouchant dans le couloir 7 du local 1. Le dispositif 8 comprend un ventilateur 18 agencé pour permettre l'entrée d'air recyclé 16 dans la chambre intérieure par l'orifice d'entrée d'air recyclé 15, lorsque cela est nécessaire. Il peut également comporter un clapet anti retour, motorisé ou non, agencé pour empêcher la sortie de l'air contenu dans la chambre intérieure 11 par l'orifice d'entrée 15 d'air recyclé.

L'air neuf de ventilation 12 et l'air recyclé 16 éventuellement amené dans la chambre intérieure 11 se mélangent, sont traités thermiquement (c'est-à-dire réchauffés ou refroidis) puis sont insufflés dans les pièces de séjour 2, 3, 4. A cet effet, le caisson 10 comporte des orifices d'insufflation 19 connectés chacun à une troisième conduite 20 s'ouvrant sur une bouche d'insufflation 21 ménagée dans la cloison d'une pièce de séjour 2, 3, 4, par exemple en partie haute.

Enfin, l'air vicié 22 est extrait de chacune des pièces techniques 5, 6 par une bouche d'extraction 23 qui, ménagée dans la cloison de ces pièces, est connectée à une quatrième conduite 24 débouchant dans le module de ventilation 9. L'air vicié 22 est alors évacué vers l'extérieur du local 1, éventuellement après être passé dans un échangeur thermique permettant un préchauffage de l'air neuf de ventilation 12.

On décrit à présent plus précisément le traitement thermique de l'air contenu dans la chambre intérieure 11 du caisson 10 et le fonctionnement du système de chauffage / rafraîchissement et ventilation du local 1.

Ce traitement thermique est obtenu au moyen d'unités- 25 de traitement thermique disposées dans la chambre intérieure 11, en amont de chaque orifice d'insufflation 19, les unités 25 étant propres à chaque orifice d'insufflation 19 et indépendantes les unes des autres. Chaque unité 25 est donc associée à une pièce distincte du local 1. Les unités 25 fonctionnent ici par circulation d'un fluide caloporteur tel que l'eau, amené et évacué par un système approprié 26 ménagé sur le caisson 10. Il est ainsi possible de chauffer ou de refroidir l'air à insuffler selon les besoins. Toutefois, d'autres types d'unités peuvent être prévus (par exemple chauffage par une résistance électrique).

L'air neuf de ventilation 12 est amené dans la chambre intérieure 11 au débit nécessaire à la conservation d'un air de bonne qualité dans le local 1. Le débit d'air global pour le local 1 est fixé en amont du dispositif 8. Il peut être constant ou asservi à au moins un paramètre mesuré et correspondant au besoin global de ventilation du local 1. La bonne répartition de l'air neuf de ventilation 12 entre les pièces de séjour 2, 3, 4 est assurée en définissant la section de chaque orifice d'insufflation 19, lequel aura autorité sur le débit. Avantageusement la perte de charge singulière constituée par l'unité 25 constituera cet orifice équivalent. Lors de la mise en route du ventilateur de recyclage 18, le débit total soufflé augmente, mais la quantité d'air neuf de ventilation 12 par pièce reste identique (le taux d'air neuf de ventilation 12 par pièce est respecté étant donné que le débit sur chacun des orifices d'insufflation 19 varie de façon proportionnelle).

Avantageusement, le système comprend une unité centrale de pilotage (non représentée) reliée à un thermostat 27 prévu dans chaque pièce de séjour 2, 3, 4. En fonction de l'écart entre la température réelle et la température de consigne dans au moins une pièce de séjour, l'unité centrale commande les unités 25 de traitement thermique pour permettre le chauffage ou le refroidissement de l'air neuf de ventilation 12 contenu dans la chambre intérieure 11 du caisson 10. Si la température de consigne ne peut pas être atteinte par le traitement thermique de l'air neuf de ventilation 12 seul, l'unité centrale de pilotage peut commander la mise en route et la vitesse de rotation du ventilateur 18 de recyclage, en fonction de l'écart entre la température réelle et la température de consigne. L'air recyclé 16 ainsi amené dans la chambre 11 se mélange avec l'air neuf de ventilation 12 et est également chauffé ou refroidi lors du passage à travers les unités 25 et avant son passage dans les orifices d'insufflation 19.

De préférence, l'unité centrale de pilotage intègre les écarts de température sur l'ensemble des pièces de séjour, pour assurer un équilibrage sur l'ensemble des pièces de séjour.

Le clapet anti-retour permet d'assurer; lors de l'arrêt du ventilateur 18, que l'air neuf de ventilation 12 sera insufflé dans les pièces de séjour et ne viendra pas passer dans le ventilateur 18 et court-circuiter la ventilation des pièces de séjour.

La régulation thermique est réalisée à chaque unité 25, ce qui permet de réaliser une régulation pièce par pièce précise. Par ailleurs, lorsque les besoins sont faibles, un chauffage uniquement de l'air neuf de ventilation 12 peut être assuré, ce qui évite de démarrer le ventilateur de recyclage 18 : on limite ainsi la consommation électrique et les nuisances sonores. Le démarrage du ventilateur 18 se fera en fonction des besoins à couvrir et d'une limite haute de température de soufflage. Dans la pratique, 60 à 80% des besoins peuvent être couverts sans démarrage du ventilateur de recyclage 18.

Afin d'éviter la stratification, c'est-à-dire le maintien de l'air chaud en partie haute des pièces de séjour, notamment si le débit d'insufflation est faible, le système selon l'invention peut en outre comprendre des moyens de brassage de l'air dans au moins une pièce de séjour.

Ces moyens de brassage de l'air peuvent être constitués du ventilateur lui-même. Dans le cas où l'une des pièces principales se trouve en surchauffe du fait de la présence d'un système de chauffage d'appoint ponctuel ou de l'exposition de sa façade au soleil, par exemple, le brassage provoqué par le ventilateur de recyclage permet de réduire les besoins globaux de chauffage en augmentant l'efficacité de récupération des apports internes (apports solaires ou apports des systèmes de chauffage ponctuels). En effet, le brassage fait transiter des calories d'une pièce en surchauffe vers une pièce en demande de chauffage.

Ainsi, l'invention apporte une amélioration déterminante à la technique antérieure, en permettant de répondre de manière simple à deux besoins souvent contradictoires, à savoir le besoin d'air neuf pour ventiler un local et le besoin de calories ou frigories véhiculées par l'air pour chauffer ou rafraîchir ce local.

L'invention permet d'une part d'obtenir un débit d'air neuf de ventilation pièce par pièce conforme aux réglementations, cet air neuf pouvant en outre être filtré et/ou préchauffé.

D'autre part, grâce à l'invention, la fourniture de chaleur ou de froid est individualisée par pièce à travers une régulation thermostatique par pièce (et non une fourniture centralisée à température constante). L'invention permet donc de répondre pièce par pièce à un besoin thermique variable.

Par ailleurs, puisqu'il est prévu une seule conduite par pièce traitant à la fois la ventilation et le chauffage / le rafraîchissement, l'invention permet de réduire l'encombrement des réseaux de distribution d'air d'un système de ventilation double-flux, de faciliter l'installation des réseaux et de diminuer le coût d'installation.

Grâce au principe double-flux, on évite l'installation de- grilles de transfert entre les pièces de séjour et le lieu où a lieu la reprise d'air recyclé.

Il va de soi que l'invention n'est pas limitée au mode de réalisation décrit ci-dessus à titre d'exemple mais qu'elle en embrasse au contraire toutes les variantes de réalisation.

## Revendications

1. Procédé de chauffage / rafraîchissement et ventilation d'un local (1) comprenant plusieurs pièces de séjour (2, 3, 4) et plusieurs pièces techniques (5, 6), dans lequel :
- on amène de l'air neuf de ventilation (12) et de l'air recyclé (16) dans une chambre intérieure (11) définie par un caisson. (10) situé dans le local (1);
- on traite thermiquement l'air contenu dans ladite chambre intérieure (11) en fonction de la température de consigne dans au moins une pièce de séjour (2, 3, 4);
- on insuffle l'air contenu dans ladite chambre intérieure (11) dans chacune des pièces de séjour (2, 3, 4) à alimenter ;
- on évacue l'air vicié (22) à partir des pièces techniques (5, 6) ;
- pour chaque pièce de séjour (2, 3, 4) à alimenter, on traite thermiquement l'air neuf de ventilation (12) destiné à être insufflé dans une pièce de séjour donnée en fonction de la température de consigne de ladite pièce de séjour, et indépendamment du traitement thermique de l'air destiné à être insufflé dans une autre pièce de séjour ;
**caractérisé en ce que** :
- seulement si cela est nécessaire pour atteindre la température de consigne dans au moins une pièce de séjour (2, 3, 4), on amène de l'air recyclé (16) dans ladite chambre intérieure (11), qui se mélange à l'air neuf de ventilation (12) et subit le même traitement thermique.

2. Procédé selon la revendication 1, **caractérisé en ce que** le débit d'air neuf de ventilation (12) amené dans une pièce de séjour (2, 3, 4) est sensiblement constant et indépendant de la température de consigne dans ladite pièce.

3. Procédé selon la revendication 1, **caractérisé en ce que** le débit d'air neuf de ventilation (12) amené dans une pièce de séjour (2, 3, 4) est asservi à au moins un paramètre mesuré dans le local (1) et correspondant au besoin de ventilation de celui-ci.

4. Procédé selon l'une des revendications 1 à 3, **caractérisé en ce qu'**on amène de l'air recyclé (16) dans la chambre intérieure (11) lorsque après avoir insufflé de l'air neuf de ventilation (12) traité thermiquement dans au moins une pièce de séjour (2, 3, 4) pendant une durée prédéterminée, la température dans ladite pièce de séjour (2, 3, 4) est toujours sensiblement différente de la température de consigne.

5. Système de chauffage / rafraîchissement et ventilation d'un local (1) comprenant plusieurs pièces de séjour (2, 3, 4) et plusieurs pièces techniques (5, 6), le système comprenant un dispositif de chauffage / rafraîchissement et ventilation comportant un caisson (10) définissant une chambre intérieure (11), le caisson (10) comportant :
- au moins un orifice d'entrée (14) d'air neuf de ventilation (12) et un orifice d'entrée (15) d'air recyclé (16) débouchant dans ladite chambre intérieure (11) ;
- des orifices d'insufflation (19) de l'air contenu dans la chambre intérieure (11), destinés à être reliés chacun à une pièce de séjour (2, 3, 4) à alimenter ;
- une pluralité d'unités (25) de traitement thermique de l'air associées chacune à un orifice d'insufflation (19) de l'air et destinées à être commandées indépendamment les unes des autres en fonction de la température de consigne de la pièce de séjour (2, 3, 4) correspondante ;
le dispositif de chauffage / rafraîchissement et ventilation comportant en outre un ventilateur (18) agencé pour permettre l'entrée d'air recyclé (16) dans la chambre intérieure (11) par l'orifice d'entrée (15) d'air recyclé (16),
**caractérisé en ce que** le système comprend une unité centrale de pilotage apte à commander la mise en route et la vitesse de rotation du ventilateur (18) de recyclage, en fonction de l'écart entre la température réelle et la température de consigne dans au moins une pièce de séjour (2, 3, 4), si la température de consigne ne peut pas être atteinte par le traitement thermique de l'air neuf de ventilation (12) seul.

6. Système selon la revendication 5, **caractérisé en ce que** chaque orifice d'insufflation (19) présente une section adaptée au débit d'air souhaité dans la pièce de séjour (2, 3, 4) correspondante.

7. Système selon la revendication 5 ou 6, **caractérisé en ce qu'**il comprend un clapet anti retour agencé pour empêcher la sortie de l'air contenu dans la chambre intérieure (11) par l'orifice d'entrée (15) d'air recyclé (16).

8. Système selon l'une des revendications 5 à 7, **caractérisé en ce qu'**il comprend en outre un module de ventilation (9) comportant une entrée d'air neuf de ventilation (12) depuis l'extérieur du local (1), une sortie d'air neuf de ventilation connectée à l'orifice d'entrée (13) d'air neuf ventilation (12) du dispositif, une entrée d'air vicié reliée à chacune des pièces techniques (5, 6) d'où l'air doit être extrait et une sortie d'air vicié vers l'extérieur du local (1).

9. Système selon la revendication 8, **caractérisé en ce que** le module de ventilation (9) est un module de VMC double flux.

10. Système selon la revendication 8 ou 9, **caractérisé en ce qu'**il comprend en outre des moyens de brassage de l'air dans au moins une pièce de séjour (2, 3, 4).

## Patentansprüche

1. Heiz-, Kühl- und Lüftungsverfahren von Räumlichkeiten (1), die mehrere Aufenthaltsräume (2, 3, 4) und mehrere technische Räume (5, 6) umfassen, bei dem:
- frische Lüftungsluft (12) und recycelte Luft (16) in eine innere Kammer (11) geführt werden, die durch einen Behälter (10) definiert ist, der sich in den Räumlichkeiten (1) befindet,
- die Luft, die sich in dieser inneren Kammer (11) befindet, in Abhängigkeit von der Solltemperatur in mindestens einem Aufenthaltsraum (2, 3, 4) thermisch behandelt wird,
- die Luft, die sich in der inneren Kammer (11) befindet, in jeden der zu versorgenden Aufenthaltsräume (2, 3, 4) geblasen wird,
- die verbrauchte Luft (22) über die technischen Räumen (5, 6) abgeleitet wird,
- für jeden zu versorgenden Aufenthaltsraum (2, 3, 4) die frische Lüftungsluft (12), die in Abhängigkeit von der Solltemperatur des Aufenthaltsraums zur Einleitung in einen bestimmten Aufenthaltsraum bestimmt ist, unabhängig von der thermischen Behandlung der Luft, die zur Einleitung in einen anderen Aufenthaltsraum bestimmt ist, thermisch behandelt wird,
**dadurch gekennzeichnet, dass**:
nur dann, wenn dies notwendig ist, um die Solltemperatur in mindestens einem Aufenthaltsraum (2, 3, 4) zu erreichen, recycelte Luft (16) in die innere Kammer (11) geleitet wird, die sich mit der frischen Lüftungsluft (12) vermischt und dieselbe thermische Behandlung erfährt.

2. Verfahren nach Anspruch 1, **dadurch gekennzeichnet, dass** der Durchsatz frischer Lüftungsluft (12), die in einen Aufenthaltsraum (2, 3, 4) eingeleitet wird, etwa konstant und unabhängig von der Solltemperatur in dem Raum ist.

3. Verfahren nach Anspruch 1, **dadurch gekennzeichnet, dass** der Durchsatz frischer Lüftungsluft (12), die in einen Aufenthaltsraum (2, 3, 4) geleitet wird, mindestens einem Parameter unterliegt, der in den Räumlichkeiten (1) gemessen wird und dem Lüftungsbedarf derselben entspricht.

4. Verfahren nach einem der Ansprüche 1 bis 3, **dadurch gekennzeichnet, dass** recycelte Luft (16) dann in die innere Kammer (11) geleitet wird, wenn, nachdem thermische behandelte frische Lüftungsluft (12) in mindestens einen Aufenthaltsraum (2, 3, 4) während einer bestimmten Dauer geführt wurde, die Temperatur in dem Aufenthaltsraum (2, 3, 4) immer noch wesentlich von der Solltemperatur abweicht.

5. Heiz-, Kühl- und Lüftungssystem einer Räumlichkeit (1), die mehrere Aufenthaltsräume (2, 3, 4) und mehrere technische Räume (5, 6) umfasst, wobei das System eine Heiz-, Kühl- und Lüftungsvorrichtung umfasst, die einen Behälter (10) aufweist, der eine innere Kammer (11) definiert, wobei der Behälter (10) aufweist:
- mindestens eine Eingangsöffnung (14) frischer Lüftungsluft (12) und eine Eingangsöffnung (15) recycelter Luft (16), die in die innere Kammer (11) münden,
- Einblasöffnungen (19) der in der inneren Kammer (11) enthaltenen Luft, die dazu bestimmt sind, jeweils mit einem zu versorgenden Aufenthaltsraum (2, 3, 4) verbunden zu sein,
- eine Vielzahl thermischer Luftbehandlungseinheiten (25), die jeweils einer Lufteinblasöffnung (19) zugeordnet sind und dazu bestimmt, unabhängig voneinander in Abhängigkeit von der Solltemperatur in dem entsprechenden Aufenthaltsraum (2, 3, 4) gesteuert zu werden,
wobei die Heiz-, Kühl- und Lüftungsvorrichtung ferner einen Lüfter (18) aufweist, der ausgebildet ist, um den Eingang recycelter Luft (16) in die innere Kammer (11) durch die Eingangsöffnung (15) recycelter Luft (16) zu erlauben,
**dadurch gekennzeichnet, dass** das System eine zentrale Steuereinheit umfasst, die imstande ist, das Ingangsetzen und die Drehgeschwindigkeit des Recyclinglüfters (18) in Abhängigkeit von der Differenz zwischen der tatsächlichen Temperatur und der Solltemperatur in mindestens einem Aufenthaltsraum (2, 3, 4) zu steuern, wenn die Solltemperatur durch die thermische Behandlung nur der frischen Lüfterluft (12) nicht erreicht werden kann.

6. System nach Anspruch 5, **dadurch gekennzeichnet, dass** jede Einblasöffnung (19) einen Querschnitt aufweist, der an den in dem entsprechenden Aufenthaltsraum (2, 3, 4) gewünschten Luftdurchsatz angepasst ist.

7. System nach Anspruch 5 oder 6, **dadurch gekennzeichnet, dass** es eine Rückströmsperre umfasst, die ausgebildet ist, um den Ausgang von Luft, die in der inneren Kammer (11) enthalten ist, durch die Eingangsöffnung (15) recycelter Luft (16) zu verhindern.

8. System nach einem der Ansprüche 5 bis 7, **dadurch gekennzeichnet, dass** es ferner ein Lüftungsmodul (9) umfasst, das einen Eingang frischer Lüftungsluft (12) von außerhalb der Räumlichkeiten (1), einen Ausgang frischer Lüftungsluft, der mit der Eingangsöffnung (13) frischer Lüftungsluft (12) der Vorrichtung verbunden ist, einen Eingang verbrauchter Luft, der mit jedem der technischen Räume (5, 6) verbunden ist, von wo die Luft abgeführt werden muss, und einen Ausgang verbrauchter Luft nach außerhalb der Räumlichkeiten (1) aufweist.

9. System nach Anspruch 8, **dadurch gekennzeichnet, dass** das Lüftungsmodul (9) ein VMC-Doppelstrommdodul ist.

10. System nach Anspruch 8 oder 9, **dadurch gekennzeichnet, dass** es ferner Luftmischmittel in mindestens einem Aufenthaltsraum (2, 3, 4) umfasst.

## Claims

1. A method for heating / cooling and ventilating a premises (1) comprising several reception rooms (2, 3, 4) and several technical rooms (5, 6), in which:
- fresh ventilation air (12) and recycled air (16) are brought into an inner chamber (11) defined by a casing (10) situated on the premises (1);
- the air contained in said inner chamber (11) is heat treated as a function of the setpoint temperature in at least one reception room (2, 3, 4);
- the air contained in said inner chamber (11) is blown into each of the reception rooms (2, 3, 4) to be supplied;
- the stale air (22) is evacuated from the technical rooms (5, 6);
- for each reception room (2, 3, 4) to be supplied, the fresh ventilation air (12) designed to be blown into a given reception room is heat treated as a function of the setpoint temperature of said reception room, and independently of the heat treatment of the air designed to be blown into another reception room;
**characterized in that**:
- only if it is necessary to achieve the setpoint temperature in at least one reception room (2, 3, 4), recycled air (16) is brought into said inner chamber (11), which mixes with the fresh ventilation air (12) and undergoes the same heat treatment.

2. The method according to claim 1, **characterized in that** the flow rate of fresh ventilation air (12) brought into a reception room (2, 3, 4) is substantially constant and independent of the setpoint temperature in said room.

3. The method according to claim 1, **characterized in that** the flow rate of fresh ventilation air (12) brought into a reception room (2, 3, 4) is subjugated to at least one parameter measured on the premises (1) and corresponding to the ventilation thereof if needed.

4. The method according to one of claims 1 to 3, **characterized in that** recycled air (16) is brought into the inner chamber (11) when, after having blown heat-treated fresh ventilation air (12) into at least one reception room (2, 3, 4) for a predetermined length of time, the temperature in said reception room (2, 3, 4) is still substantially different from the setpoint temperature.

5. A system for heating / cooling and ventilation a premises (1) comprising several reception rooms (2, 3, 4) and several technical rooms (5, 6), the system comprising a heating / cooling and ventilation device including a casing (10) defining an inner chamber (11), the casing (10) including:
- at least one inlet orifice (14) for fresh ventilation air (12) and one inlet orifice (15) for recycled air (16) emerging in said inner chamber (11);
- blowing orifices (19) for blowing air contained in the inner chamber (11), designed each to be connected to a reception room (2, 3, 4) to be supplied;
- a plurality of air heat treatment units (25) each associated with an air blowing orifice (19) and designed to be controlled independently of each other as a function of the setpoint temperature of the corresponding reception room (2, 3, 4);
the heating / cooling and ventilation device further including a fan (18) arranged to allow recycled air (16) to enter the inner chamber (11) through the recycled air (16) inlet orifice (15),
**characterized in that** the system comprises a central control unit capable of controlling the start-up and speed of rotation of the recycling fan (18), as a function of the deviation between the actual temperature and the setpoint temperature in at least one reception room (2, 3, 4), if the setpoint temperature cannot be achieved by the heat treatment of the fresh ventilation air (12) alone.

6. The system according to claim 5, **characterized in that** each blowing orifice (19) has a section adapted to the desired air flow rate in the corresponding reception room (2, 3, 4).

7. The system according to claim 5 or 6, **characterized in that** it comprises a check valve arranged to prevent the air contained in the inner chamber (11) from exiting through the recycled air (16) inlet orifice (15).

8. The system according to one of claims 5 to 7, **characterized in that** it further comprises a ventilation module (9) including a fresh ventilation air inlet (12) from the outside of the premises (1), a fresh ventilation air outlet connected to the fresh ventilation air (12) inlet orifice (13) of the device, a stale air inlet connected to each of the technical rooms (5, 6) from which the air must be removed and a stale air outlet toward the outside of the premises (1).

9. The system according to claim 8, **characterized in that** the ventilation module (9) is a dual-flow CMV module.

10. The system according to claim 8 or 9, **characterized in that** it further comprises means for mixing the air in at least one reception room (2, 3, 4).
